(19) Europäisches Patentamt

European Patent Office

Office européen des brevets

(11) Veröffentlichungsnummer : **0 154 866 B1**

# (12) EUROPÄISCHE PATENTSCHRIFT

(45) Veröffentlichungstag der Patentschrift :
30.09.87

(21) Anmeldenummer : 85101963.8

(22) Anmeldetag : 22.02.85

(51) Int. Cl.⁴ : **B 23 K 26/04**, H 01 S 3/101, G 02 B 26/08, G 05 D 3/14, G 01 S 3/78

(54) Einrichtung zur Kompensation der Auswanderung eines Laserstrahls.

(30) Priorität : 24.02.84 DE 3406677

(43) Veröffentlichungstag der Anmeldung :
18.09.85 Patentblatt 85/38

(45) Bekanntmachung des Hinweises auf die Patenterteilung : 30.09.87 Patentblatt 87/40

(84) Benannte Vertragsstaaten :
CH DE FR GB LI SE

(56) Entgegenhaltungen :
EP-A- 0 084 728
FR-A- 2 505 505
US-A- 4 020 340
PATENT ABSTRACTS OF JAPAN, Band 8, Nr. 80, 12. April 1984, Seite (M-289) (1517) ; & JP-A-58-224088 (NIPPON DENKI K.K.) 26-12-1983
PATENT ABSTRACTS OF JAPAN, Band 6, Nr. 260, 18.Dezember 1982, Seite (M-180) (1138); & JP-A-57-154389 (TOKYO SHIBAURA DENKI K.K.) 24-09-1982
PATENT ABSTRACTS OF JAPAN, Band 6, Nr. 61, 20. April 1982, Seite (M-123) (939); & JP-A-57-4393 (KAWA-SAKI SEITETSU K.K.) 09-01-1982
PATENT ABSTRACTS OF JAPAN, Band 7, Nr. 18, 25. Januar 1983, Seite (P-170 ) (1163); & JP-A-57-172306 (TOKYO DENKI KAGAKU KOGYO K.K.) 23-10-1982
Die Akte enthält technische Angaben, die nach dem Eingang der Anmeldung eingereicht wurden und die nicht in dieser Patentschrift enthalten sind.

(73) Patentinhaber : Firma Carl Zeiss
D-7920 Heidenheim (Brenz) (DE)
CH DE FR GB LI SE
CARL-ZEISS-STIFTUNG trading as CARL ZEISS
D-7920 Heidenheim (Brenz) (DE)
GB

(72) Erfinder : Müller, Gerhard, Prof. Dr.
Philipp-Funk-Strasse 112
D-7080 Aalen (DE)
Erfinder : Hohberg, Gerhard, Dr.
Kopernikusstrasse 34
D-7082 Oberkochen (DE)
Erfinder : Greve, Peter, Dr.
Teussenbergweg 13
D-7081 Essingen (DE)

## Beschreibung

Zur Führung von Laserstrahlen verwendet man entweder Lichtleiter in Form von flexiblen Glasfasern oder Übertragungssysteme, die ablenkende Optik, in der Regel Spiegel enthalten. Insbesondere für die Materialbearbeitung mittels Hochleistungs-$CO_2$-Lasern werden ausschließlich Übertragungssysteme des letztgenannten Typs verwendet, da bisher keine Faserkabel bekannt sind, die im Wellenlängenbereich eines $CO_2$-Lasers ausreichend verlustarm übertragen.

Die überwiegende Mehrzahl der bekannten Laserbearbeitungsmaschinen ist dazu eingerichtet ebene Werkstücke, wie z. B. Bleche, zu schneiden oder zu verschweißen. Bei diesen Maschinen ist der Laser mit seinen Systemen zur Strahlführung und Fokussierung ortsfest aufgestellt und das Werkstück wird in zwei Richtungen horizontal entsprechend der gewünschten Kontur unter dem den Laserstrahl fokussierenden Schneidkopf bewegt. Eine derartige Maschine ist z. B. in der US-PS 440 31 34 beschrieben.

Daneben sind jedoch z. B. aus der DE-OS 32 26 448 auch Geräte zur Laserbearbeitung auf der Basis herkömmlicher Werkzeugmaschinen bekannt, bei denen der Schneidkopf selbst in mehreren Koordinaten verfahrbar ist. Hier ist der Lasergenerator neben der eigentlichen Bearbeitungsmaschine aufgestellt und sein Strahl wird über mit den beweglichen Maschinenteilen gekoppelte Spiegel längs der Achsen der Bearbeitungsmaschine geführt.

Wird der Lasergenerator separat neben der eigentlichen Bearbeitungsmaschine aufgestellt, dann treten Probleme bezüglich seiner exakten Einkopplung in das Strahlführungssystem der Maschine auf. Denn Relativbewegungen zwischen Generator und Maschine beispielsweise infolge von Schwingungen im Fundament oder Temperaturänderungen etc. können ein Auswandern des Laserstrahls verursachen. Da sich dabei die Lage des Fokus ändert, treten Bearbeitungsfehler auf. Bei größeren Abweichungen könnte sogar der Fall eintreten, das der Laser auf die Fassungen seiner Fokussieroptik auftrifft, was bei Hochleistunglaserns mit einer Leistung von mehreren Kilowatt unweigerlich zu deren Zerstörung führt.

Zwar ist es bei Lasersystemen zum Auslesen von Informationsspeicherplatten bekannt, Regeleinrichtungen vorzusehen, die den Fokus des Laserstrahls radial einer vorgegebenen Spur nachführen (DE-PS 26 30 381). Die Regeleinrichtungen für diese, mit sehr geringer Leistung arbeitenden Lasersysteme werten jedoch die Ablage des Fokus von der sichtbar vorgezeichneten Datenspur aus. Für Laserbearbeitungssysteme sind auf dieser Basis arbeitende Regeleinrichtungen nicht brauchbar. Dort begnügt man sich damit, Abweichungen der Fokusposition durch eine Rekalibrierung zwischen den Bearbeitungsvorgängen zu korrigieren, wie dies in der DE-OS 31 34 556 beschrieben ist.

Aus der JP-A-57-154389 ist eine Einrichtung zur Kompensation der Auswanderung eines über eine ablenkende Optik in einer Bearbeitungsmaschine geführten Laserstrahles bekannt, die steuerbare Ablenkelemente in Form je eines Spiegels für jede Koordinate (X, Y) besitzt, wobei der auftretende Strahlversatz durch eine Verschiebung des jeweiligen Spiegels und die auftretenden Winkelfehler des Strahles durch ein Verschwenken des gleichen Spiegels kompensiert werden. Die den Spiegeln zugeordneten beiden Detektoren für Strahlversatz und Winkelfehler sind zu einer gemeinsamen Einheit zusammengefaßt und werden von einem in Lichtrichtung gesehen hinter dem letzten Ablenkspiegel angeordneten Strahlteiler beaufschlagt.

Die bekannte Einrichtung ist insofern nachteilig, als mit einer translatorischen Verschiebung sich Versatz nur in geringem Ausmaß ausreichend schnell kompensieren läßt. In der bekannten Einrichtung erzeugt jede Winkelveränderung einen der Entfernung zwischen den Stellspiegeln und den Detektoren proportionalen Versatz, so daß die für die Kompensation vorgesehene Linearbewegung die Zeitkonstante des Regelkreises bestimmt.

Es ist die Aufgabe der vorliegenden Erfindung, eine Einrichtung zur Kompensation der Auswanderung eines von einem feststehenden Lasergenerator ausgehenden, über eine ablenkende Optik zu einer Bearbeitungs- oder Meßmaschine übertragenen Laserstrahles zu schaffen, wobei die Nachteilen der Stand der Technik vermieden werden.

Ausgehend von einer Einrichtung nach dem Oberbegriff des Anspruches 1 wird diese Aufgabe durch die im Kennzeichen des Anspruches angegebenen Maßnahmen gelöst.

Die Erfindung macht von der Erkenntnis Gebrauch, daß sich eine ausreichend genaue Strahlführung über die mit z. B. einer Bearbeitungsmaschine fest verbundenen Spiegelelemente in der Regel dann ohne weiteres sicherstellen läßt, wenn der Laserstrahl sowohl in Bezug auf Versatz als auch in Bezug auf Winkelabweichungen stets in gleicher Lage in das Strahlführungssystem der Maschine eingekoppelt wird. Dies wird durch mindestens zwei vor dem Eingang der Strahlführungssystems angeordnete, steuerbare Ablenkelemente in Form von Schwenkspiegeln sichergestellt, von denen das zur Kompensation von radialem Strahlversatz und das zweite zur Kompensation von Winkelfehlern, auch zusätzlich vom ersten Strahlablenker dabei eingeführter Winkelfehler, dient. Aufgrund des relativ großen Abstandes zwischen dem Stellspiegel 6 und dem Einkoppelpunkt in die Maschine kann die räumliche Lage des Laserstrahles in X- und Y-Richtung, d. h. der Versatz durch ein Verschwenken des ersten Stellspiegels bereits um kleine Winkel korrigiert werden. Dabei sind nur geringe Massen zu bewegen, so daß die Kompensation sehr schnell erfolgen kann.

Es ist vorteilhaft die beiden Lagefehler bereits vor der Regelsignalgewinnung zu separieren, um Regelschwingungen aufgrund der Konkurrenz nichtentkoppelter Kreise zu vermeiden. Erreicht wird dies durch die Vorschaltung eines Kollimators vor den zweiten positionsempfindlichen Detektor, denn in der Kollimatoranordnung wird die Lage des Fokus nur von Winkelfehlern beeinflußt, nicht jedoch von Versatz.

Bei Verwendung der erfindungsgemäßen Regeleinrichtung werden die Anforderungen an das exakte Einhalten der gegenseitigen Justierung zwischen einem separat aufgestellten Laser und der damit versorgten Bearbeitungsmaschine verringert, so daß der Aufwand zur mechanischen und thermischen Stabilisierung herabgesetzt werden kann. Das ist insbesondere dann von Vorteil, wenn mehrere Maschinen von einem Lasergenerator aus versorgt werden sollen.

Da es problematisch ist die Auskoppelelemente direkt in den Strahl eines Arbeitslasers mit hoher Leistung einzufügen, ist es zweckmäßig, parallel aber nicht koaxial mit dem Strahl des Arbeitslasers einen Hilfslaserstrahl zu führen, in dem die Auskoppelelemente angeordnet sind. Bei diesem Hilfslaser kann es sich beispielsweise um den ohnehin zur Markierung des unsichtbaren Fokus des Arbeitslasers dienenden Pilotlaser handeln.

Weitere vorteilhafte Ausgestaltungen der Erfindung finden sich in den Unteransprüchen und werden nachstehend anhand der Beschreibung eines Ausführungsbeispiels der Erfindung näher erläutert.

Figur 1 ist eine Prinzipskizze des Strahlenganges eines in eine Bearbeitungs- oder Meßmaschine eingekoppelten Lasers gemäß einem ersten Ausführungsbeispiel ;

Figur 2 ist eine ergänzende perspektivische Darstellung des Strahlverlaufs im Schneidkopf der Maschine aus Fig. 1 ;

Figur 3 ist eine Prinzipskizze des Strahlenganges eines in eine Bearbeitungs- oder Meßmaschine eingekoppelten Lasers gemäß einem zweiten Ausführungsbeispiel der Erfindung ;

Figur 4 ist eine detailliertere Skizze der positionsempfindlichen Detektoren aus Fig. 1 bzw. Fig. 3 ;

Figur 5 ist eine detailliertere Skizze der Stellspiegel aus Fig. 1 bzw. Fig. 3.

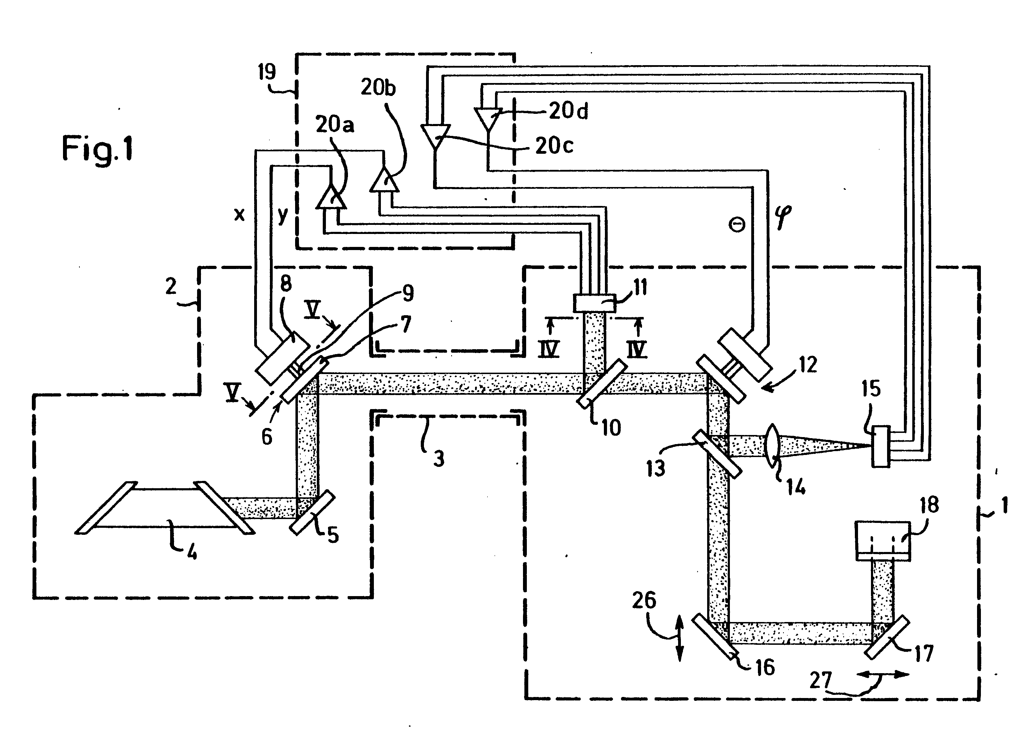

In der Prinzipskizze nach Fig. 1 umfaßt der mit 1 bezeichnete, gestrichelt dargestellte Bereich ein an eine Bearbeitungs- bzw. Meßmaschine angebautes Strahlführungssystem. Mit 2 ist das Gehäuse eines getrennt von der Maschine 1 aufgestellten Hochleistungs $CO_2$-Lasers 4 bezeichnet. Ein Schutzrohr 3 verbindet das Gehäuse 2 und die Maschine 1 an der Stelle, an der der Laserstrahl in die Maschine 1 eingekoppelt wird.

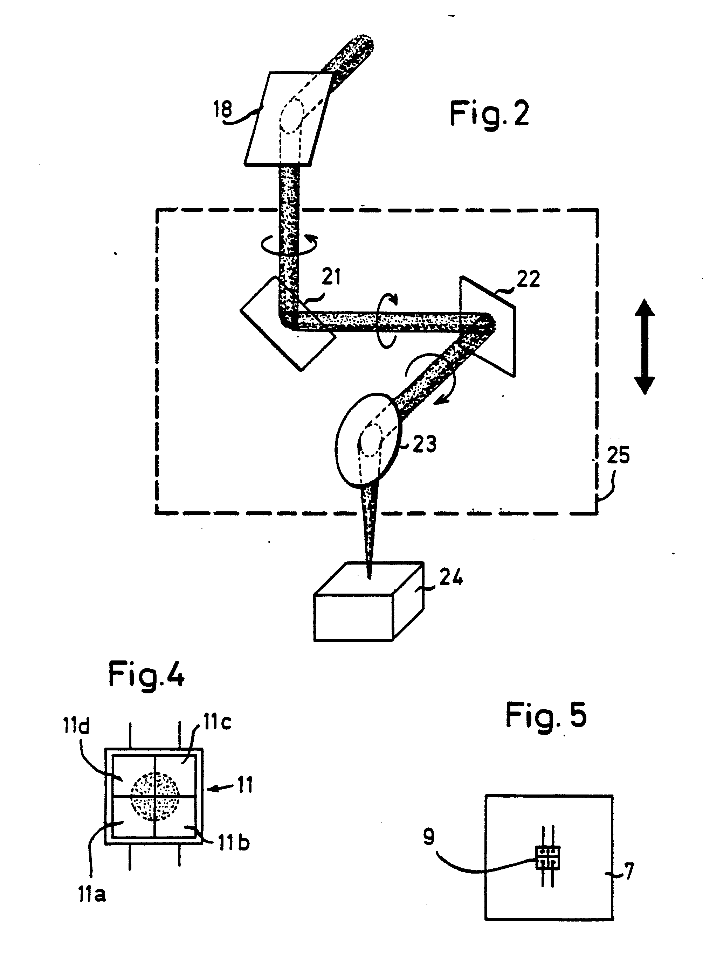

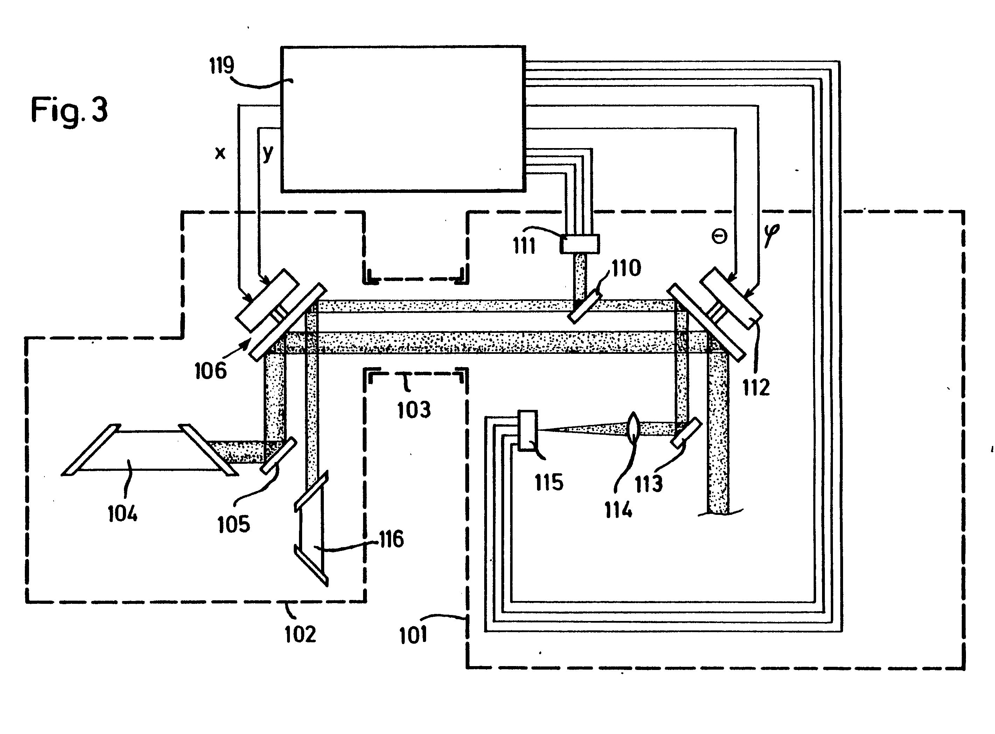

Im Bereich des Gehäuses 2 für den Laser 4 ist dessen Strahl über einen Umlenkspiegel 5 sowie über einen am Ausgang des Gehäuses 1 angeordneten Strahlablenker in Form eines Stellspiegels 6 geführt, dessen Ablenkwinkel durch ein piezoelektrisches Biegeelement 9, das die Spiegelfläche 7 mit seiner Halterung 8 verbindet, in einem kleinen Winkelbereich verstellt werden kann. Wie Figur 5 zeigt, besteht das piezoelektrische Biegelement 9 aus vier einzeln ansteuerbaren Piezoelementen. Bei gegenläufiger Ansteuerung einander gegenüberliegender Elemente bzw. Elementenpaare verkrümmt sich das Biegelement ähnlich wie ein Bimetallstreifen und der Spiegel 7 wird mit seiner Flächennormalen bezüglich des auffallenden Strahls um einen kleinen Winkel verstellt, dessen Betrag und Richtung von der Spannung an den Piezoelementen abhängen.

Der Spiegel 7 reflektiert den Laserstrahl durch das Schutzrohr 3 hindurch auf einen zweiten Stellspiegel 12, der am Eingang des Strahlführungssystems der Meß- bzw. Bearbeitungsmaschine 1 angeordnet ist und den gleichen Aufbau besitzt wie der Stellspiegel 6.

Das Strahlführungssystem innerhalb der Maschine 1 besteht im wesentlichen aus den einzelnen Verschiebeachsen der Maschine zugeordneten Planspiegeln 16 und 17, die wie die Pfeile andeuten, auf den beweglichen Maschinenteilen befestigt sind. Mit 18 ist ein weiterer Spiegel bezeichnet, über den der Strahl in vertikaler Richtung auf den in Fig. 2 dargestellten, höhenverstellbaren Laserbearbeitungskopf gelenkt wird.

Dieser Bearbeitungskopf 25 enthält zwei Planspiegel 21 und 22 sowie einen Paraboloidspiegel 23, durch den der Strahl auf das zu bearbeitende Werkstück 24 fokussiert wird. Die Spiegel 21, 22 und 23 sind mit der auf sie folgenden Optik jeweils um die Achse des auf sie auffallenden Strahls drehbar. Durch Drehung der Spiegel 22 und 23 läßt sich der Winkel, unter dem der Laserstrahl auf das Werkstück 24 auftrifft, frei einstellen. Durch eine Drehung des gesamten Kopfes 25 kann außerdem die Richtung der Polarisation des Laserstrahls eingestellt werden. Diese sollte mit der Schneidrichtung übereinstimmen, damit optimale Arbeitsergebnisse erzielt werden.

Wie einleitend bereits gesagt kann der Laserfokus infolge von Schwingungen in den Fundamenten oder thermischer Bewegung zwischen dem separat aufgestellten Lasergenerator 2 und der Maschine 1 aus seiner eingestellten Lage auswandern. Um dies zu verhindern ist am Eingang des Strahlführungssystems der Maschine 1 ein Strahlteiler 10 angeordnet, der einen geringen Bruchteil der Laserstrahlung auf einen positionsempfindlichen, photoelektrischen Detektor 11 ausspiegelt. Bei dem Detektor 11 handelt es sich um einen sogenannten Quadrantendetektor, wie er in Fig. 4 dargestellt ist. Danach ist die photoempfindliche Fläche des Detektors 4 in einzelne Quadranten aufgeteilt, die nur dann das gleiche Signal abgeben, wenn der ausgespiegelte Teilstrahl genau zentrisch auftrifft.

Die Ausgänge des Detektors 11 sind mit einer elektrischen Schaltung 19 verbunden, in der z. B. durch zwei Operationsverstärker 20a und 20b die Differenz der Signale diagonal gegenüberliegender Quadranten verstärkt wird. Mit Hilfe des daraus gewonnenen Regelsignals wird der Stellspiegel 6 verschwenkt. Aufgrund des relativ großen räumlichen Abstandes zwischen dem Stellspiegel 6 und dem Einkoppelpunkt in die Maschine 1, in dessen Nähe der Detektor 11 angeordnet ist, kann durch ein Verschwenken des Spiegels 6 bereits um kleine Winkel die räumliche Lage des Laserstrahls in x- und y-Richtung gut korrigiert werden. Der so gebildete Regelkreis stellt also sicher, daß der Strahl des Lasers 4 immer in gleicher Position in die Maschine eingekoppelt wird, unabhängig von Versatz zwischen dem Generatorgehäuse 2 und der Maschine 1.

Neben der beschriebenen Korrektur von Strahlversatz ist es außerdem nötig, die Winkellage, unter dem der Strahl in die Maschine 1 eingekoppelt wird, konstant zu halten. Denn Fluktuationen der Winkellage wirkt sich ebenfalls auf die Position des Fokus aus und zwar umso stärker, je länger der anschließende optische Weg zwischen dem Einkoppelpunkt und dem Fokus ist.

Zur Korrektur der Winkellage dient der zweite Stellspiegel 12 in Verbindung mit einem zweiten photoeleketrischen Detektor 15, der von einem in Strahlrichtung gesehen hinter dem Stellspiegl 12 angeordneten Strahlteiler 13 mit einem geringen Bruchteil der Laserstrahlung beaufschlagt wird. Der Detektor 15 besitzt den gleichen Aufbau wie der Detektor 11 und ist ebenso mit seinen Ausgängen an die Steuerelektronik 19 angeschlossen, in der — durch zwei weitere Operationsverstärker 20c und 20d vereinfacht dargestellt — das Regelsignal für die winkelmäßige Nachstellung des Laserstrahls in $\Theta$ und $\varphi$ durch den Stellspiegel 12 erzeugt wird.

Zwischen dem Strahlteiler 13 und dem Quadrantendetektor 15 ist ein Kollimator 14 angeordnet. Die Kollimatoranordnung stellt sicher, daß der Detektor 15 allein auf Winkeländerungen des Laserstrahls anspricht, da die vom Detektor 15 nachgewiesene Position des Fokus in der Kollimatoranordnung gegenüber Versatz des Strahls in x bzw. y invariant ist.

Durch diese Maßnahme sind die beiden Regelkreise 10-11-20ab-6 und 13-14-15-20cd-12 voneinander entkoppelt, so daß Regelschwingungen aufgrund der Konkurrenz beider Kreise von vornherein vermieden sind.

In Figur 3 ist ein weiteres Ausführungsbeispiel der Erfindung dargestellt. Auch hier handelt es sich um einen Bearbeitslaser 104 hoher Leistung, der in einem separaten Gehäuse 102 auf nichtdargestellten, eigenen Schwingungsdämpfern neben der Meß- oder Bearbeitungsmaschine 101 aufgestellt ist, in deren Führungssystem der Laserstrahl eingekoppelt werden soll.

Zwei steuerbare Stellspiegel 106 und 112 dienen dazu Versatz und Winkeländerungen des darüber geführten Strahls des Arbeitslasers 104 zu korrigieren. Zur Kontrolle von Position und Winkellage wird jedoch nicht, wie im Ausführungsbeispiel nach Figur 1, ein Teil der Strahlung des Arbeitslasers über Strahlteiler ausgespiegelt und detektiert. Vielmehr wird ein zusätzlicher, ebenfalls im Gehäuse 102 angeordneter Pilotlaser 116 eingesetzt, dessen Strahl parallel versetzt zum Strahl des Arbeitslasers 104 ebenfalls über die Ablenkspiegel 106 und 112 geführt wird.

Ein vor dem Stellspiegel 112 am Eingang des optischen Führungssystems der Maschine 101 angeordneter Strahlteiler 110 spiegelt einen Teil der Strahlung des Pilotlasers 116 auf einen Quadrantendetektor 111 zur Gewinnung des Regelsignals zur Korrektur von Strahlversatz. Der verbleibende Teil der Pilotstrahlung fällt nach Umlenkung durch den Stellspiegel 112 auf einen festen Spiegel 113, hinter dem ein Kollimator 14 und darauffolgend der zweite Quadrantendetektor 115 zum Nachweis von Winkelfehlern angeordnet ist.

Beide Detektoren 111 und 115 sind an die elektronische Regeleinheit 119 angeschlossen, in der ihre Signale zur Erzeugung der Regelspannung für die Positionierung der Stellspiegel verarbeitet werden. Nicht dargestellt ist das anhand von Figur 1 und 2 bereits erläuterte Führungssystem für den weiteren Verlauf des Strahls des Arbeitslasers 104 in der Maschine 101.

Durch die Verwendung des Pilotlasers 116 zur Gewinnung des Regelsignals wird der Strahl des Arbeitslasers 104 von transmittierender Optik freigehalten. Das ist insbesondere bei Infrarotlasern hoher Leistungsdichte wichtig, da Strahlteiler mit ausreichend guter Transparenz in dem Wellenlängenbereich z. B. eines $CO_2$-Lasers schwer zu realisieren sind.

In beiden Ausführungsbeispielen nach Figur 1 und Figur 3 wurde der Versatz des Arbeitslasers durch eine winkelmäßige Nachstellung über einen in der Nähe des Lasers angeordneten Stellspiegel kompensiert. Der dabei eingeführte Winkelfehler wurde zusammen mit anderen, zufälligen Winkelfehlern von einem zweiten, am Eingang der Meß- oder Bearbeitungsmaschine angeordneten Spiegel korrigiert. Ohne den Bereich der Erfindung zu verlassen ist es jedoch auch möglich, statt der rotatorisch arbeitenden Stellspiegel 6 bzw. 106 translatorisch arbeitende Ablenkelemente einzusetzen, um den Strahlversatz zu korrigieren.

## Patentansprüche

1. Einrichtung zur Kompensation der Auswanderung eines von einem feststehenden Lasergenerator (4, 104) ausgehenden, über eine ablenkende Optik zu einer Bearbeitungs- bzw. Meßmaschine (1, 101) übertragenen Laserstrahls wobei mindestens zwei den Versatz und die Winkelstellung des geführten Strahls steuernde Ablenkelemente (6, 12, 106, 112) und diesen zugeordnete, positionsempfindliche Detektoren (11, 15, 111, 115) vorgesehen sind, die von in Lichtrichtung gesehen hinter den steuerbaren Ablenkelementen ausgekoppelten Teilstrahlenbündeln beaufschlagt werden, dadurch gekennzeichnet, daß ein als Schwenkspiegel ausgebildetes erstes steuerbares Ablenkelement (6, 106) im Bereich des Gehäuses für den feststehenden Laser angeordnet ist und den auftretenden Strahlversatz durch eine Änderung der Winkelstellung kompensiert, ein ebenfalls als Schwenkspiegel ausgebildetes zweites steuerbares Ablenkelement (12, 112) am Eingang des optischen Führungssystems der Maschine (1, 101) angeordnet ist und die Winkelstellung des Strahls steuert, und der Strahlteiler (10, 110), der das Teilstrahlenbündel für den dem ersten Ablenkelement zugeordneten Detektor (11, 111) auskoppelt, vor dem zweiten Ablenkelement (12, 112) am Eingang der Maschine (1, 101) angeordnet ist.

2. Einrichtung nach Anspruch 1, dadurch gekennzeichnet, daß dem positionsempfindlichen Detektor (15, 115), der dem in Lichtrichtung gesehen zweiten Ablenkelement (12, 112) zugeordnet ist, ein Kollimator (14, 114) vorgeschaltet ist.

3. Einrichtung nach Anspruch 1- 2, dadurch gekennzeichnet, daß die Auskopplung der Teilstrahlenbündel durch Strahlteiler (110, 113) erfolgt, die im Strahlengang eines Hilfslasers (116) angeordnet sind.

4. Einrichtung nach Anspruch 3, dadurch gekennzeichnet, daß der Strahl des Hilfslasers (116) parallel zu dem des Arbeitslasers (104) versetzt geführt ist.

## Claims

1. Arrangement for compensating for the excursion of a laser beam, which emanates from a fixed laser generator (4, 104) and is guided to a working- or measuring machine (1, 101) via deflecting optics, comprising at least two deflecting elements (6, 12, 106, 112) for controlling offset and angular position of the guided beam which cooperate with positionsensitive detectors (11, 15, 111, 115) receiving partial beams diverted downstream of the controllable deflecting elements, characterized in that a first controllable deflecting element (6, 106) constructed as a pivotable mirror is arranged within the limits of the housing of the fixed laser and compensates the occuring offset of the Laser beam by changing its angular position, in that a second controllable deflecting element (12, 112) which is also constructed as a pivotable mirror is arranged at the entrance of the optical beam guidance system of the machine (1, 101) and controls the angular position of the laser beam, and in that the beam splitter (10, 110) diverting the partial beam guided to the detector (11, 111) which is associated to the first deflecting element is arranged in front of the second deflecting element (12, 112) at the entrance of the machine (1, 101).

2. Arrangement according to claim 1, characterized in that a collimator (4, 114) is arranged in front of the positionsensitive detector (5, 115) which is associated to the second deflecting element (2, 112) as seen in light direction.

3. Arrangement according to claims 1- 2, characterized in that the diverting of the partial beams is effected by beam splitters (110, 113) which are arranged within the ray path of an auxiliary laser (116).

4. Arrangement according to claim 3, characterized in that the beam of the auxiliary laser (116) is disposed in spaced parallel relationship to the beam of the working laser (104).

## Revendications

1. Dispositif de compensation de l'écart d'un rayonnement laser émis par un générateur de laser fixe (4, 104) et transmis par l'intermédiaire d'un système optique de déviation à une machine d'usinage ou de mesure (1, 101), où il est prévu au moins deux éléments de déviation (6, 12, 100, 112) contrôlant le décalage et la position angulaire du rayonnement guidé ainsi que des détecteurs sensibles à une position (1, 15, 111, 115) qui leur sont associés et qui sont sollicités par des faisceaux de rayonnement partiel découplés, en considérant la direction de la lumière, en arrière des éléments de déviation pouvant être commandés, caractérisé en ce qu'un premier élément de déviation pouvant être commandé (6, 106), agencé sous la forme d'un miroir pivotant, est disposé dans la zone du carter du laser fixe et assure la compensation du décalage de rayonnement par une modification de la position angulaire, un second élément de déviation pouvant être commandé (12, 112), agencé également sous forme d'un miroir pivotant est disposé à l'entrée du système optique de guidage de la machine (1, 101) et commande la position angulaire du rayonnement, et le diviseur de rayonnement (10, 110), qui découple le faisceau de rayonnement partiel pour le détecteur (11, 111) associé au premier élément de déviation est disposé devant le second élément de déviation (12, 112) à l'entrée de la machine (1, 101).

2. Dispositif selon la revendication 1, caractérisé en ce qu'il est prévu un collimateur (14, 114) avant le détecteur sensible à une position (15, 115), qui est associé, en considérant la direction de la lumière, au second élément de déviation (12, 112).

3. Dispositif selon une des revendications 1 ou 2, caractérisé en ce que le découplage du faisceau de rayonnement partiel est effectué par des diviseurs de rayonnement (110, 113) qui sont disposés dans le trajet du rayonnement d'un laser auxiliaire (116).

4. Dispositif selon la revendication 3, caractérisé en ce que le rayonnement du laser auxiliaire (116) est guidé en étant décalé parallèlement à celui du laser de travail (104).

0 154 866

Fig.1

1

Fig. 2

Fig. 4

Fig. 5

Fig. 3

119

x    y

111    110    Θ    φ

106

112

104    103

105    115    113

116    114

102    101

0 154 866